# EUROPEAN PATENT APPLICATION

(11) **EP 4 841 877 A1**
(43) Date of publication of application: **18.11.2026**
(21) Application number: 24916252.0
(22) Date of filing: 26.04.2024
(51) Int. Cl.: H02M 3/156, H02M 1/32, H02J 3/32, H02J 7/00

(54) **DC-DC CONVERTER, CONTROL METHOD AND APPARATUS THEREFOR, AND STORAGE MEDIUM**

(30) Priority: 11.01.2024 CN 202410039252
(71) Applicant: Contemporary Amperex Technology Co., Limited, Ningde, Fujian 352100 (CN)
(72) Inventor: LIN, Luobin, Ningde, Fujian 352100 (CN); ZHENG, Guoping, Ningde, Fujian 352100 (CN); PAN, Xianxi, Ningde, Fujian 352100 (CN); YAN, Yu, Ningde, Fujian 352100 (CN); DAN, Zhimin, Ningde, Fujian 352100 (CN)
(74) Representative: Kraus & Lederer PartGmbB
(86) International application number: PCT/CN2024/090114
(87) International publication number: WO 2025/148195

(57) **Abstract**

The present application relates to the field of voltage conversion control, and in particular to a DC-DC converter, a control method and apparatus therefor, and a storage medium. The method comprises: acquiring a first side parameter and a second side parameter of a DC-DC converter, searching for a target duty ratio of the DC-DC converter on the basis of 'a correspondence between the first side parameter, the second side parameter and a duty ratio; and determining a feedforward control signal of the DC-DC converter on the basis of the target duty ratio, and controlling the DC-DC converter on the basis of the feedforward control signal and a feedback control signal. By means of the method, the feedforward control signal can be quickly determined on the basis of the correspondence, thereby facilitating increasement of the response speed of a system and facilitating reduction of a PI parameter, thus reducing oscillation and improving the system stability.

## Description

The present application claims the priority of the Chinese patent application with the present application number 202410039252.9 and the title of "DC-DC CONVERTER, CONTROL METHOD AND APPARATUS THEREFOR, AND STORAGE MEDIUM" filed by China National Intellectual Property Administration on January 11, 2024, the entire contents of which are incorporated herein by reference.

### TECHNICAL FIELD

The present application relates to the field of voltage conversion control, and specifically relates to a DC-DC converter, a control method and apparatus therefor, and a storage medium.

### BACKGROUND

With the rapid development of new energy grid connection, distributed energy systems, energy storage systems, and electric vehicles, the demand for bidirectional DC-DC converters (direct current-direct current converter) increases. For example, in the energy storage systems, DC-DC converters can step down high-voltage power from a grid to charge energy storage batteries, or step up the low-voltage power from the energy storage batteries to provide power to grid loads.

As the DC-DC converters are used in the energy storage systems and are in the charging state, because of voltage fluctuations in the power grid and the time-varying and nonlinear nature of new energy power generation, sudden changes in charging voltage or charging current of the energy storage batteries may occur during charging; and if the DC-DC converters are in a discharging state, the switching on and off of the DC load or the state switching will cause sudden changes in the discharge power. Sudden changes in power parameters during charging or discharging will affect the system stability. Although increasing a PI parameter can inhibit power fluctuations on both sides of the DC-DC converters to some extent, the system using the PI parameter increasing method is slow in response and prone to oscillations, which affects system stability.

### SUMMARY

In view of above, the embodiments of the present application provide a DC-DC converter, a control method and apparatus therefor, and a storage medium, aiming to solve the problem in the prior art that during inhibiting power fluctuations on both sides of the DC-DC converter, the system is slow in response and prone to oscillations, which affects the system stability.

In a first aspect, the embodiment of the present application provides a control method for a DC-DC converter; the method includes: acquiring a first-side parameter and a second-side parameter of the DC-DC converter; searching for a target duty ratio of the DC-DC converter on the basis of a correspondence relationship between the first-side parameter, the second-side parameter, and the duty ratio, in which, the correspondence relationship between the first-side parameter, the second-side parameter, and the duty ratio is a correspondence relationship calibrated when the DC-DC converter is in a preset stable operating state; and determining a feedforward control signal of the DC-DC converter on the basis of the target duty ratio, and controlling the DC-DC converter on the basis of the feedforward control signal and the feedback control signal.

The target duty ratio corresponding to the first-side parameter and the second-side parameter of the DC-DC converter is determined on the basis of the calibrated correspondence relationship; the feedforward control signal of the DC-DC converter is determined on the basis of the target duty ratio; and on the basis of the determined feedforward control signal and in combination with the feedback control signal of the DC-DC converter, the conversion control is performed. In the method, the feedforward control signal can be quickly determined on the basis of the correspondence relationship, which is beneficial to improving the system response speed and reducing the PI parameter, thereby reducing oscillations and improving the system stability.

In conjunction with the first aspect, in a first possible embodiment in the first aspect, the determining a feedforward control signal of the DC-DC converter on the basis of the target duty ratio includes: allocating the target duty ratio according to a set duty ratio allocation strategy, and determining a first duty ratio of the feedforward control signal.

During determining the feedforward control signal on the basis of the target duty ratio, the target duty ratio can be allocated on the basis of various duty ratio allocation strategies, so that a portion of the target duty ratio is allocated to the feedforward control signal. Since a portion of the duty ratio is allocated to the feedforward control signal, the amount of increase in the feedback control signal can be reduced, which is beneficial to improving the system response speed. The feedback control signal does not need a large PI control parameter, so that the system oscillations can be reduced, thereby improving the system stability.

In conjunction with the first possible embodiment in the first aspect, in a second possible embodiment in the first aspect, the allocating the target duty ratio according to a set duty ratio allocation strategy, and determining a first duty ratio of the feedforward control signal includes: determining the first duty ratio of the feedforward control signal according to a product of the target duty ratio and a set duty ratio allocation coefficient.

During allocating the target duty ratio, it can be allocated according to the set duty ratio allocation coefficient, that is, a value of the first duty ratio of the feedforward control signal is determined according to the product of the target duty ratio and the duty ratio allocation coefficient. The duty ratio allocation coefficient ranges from [0, 1], the smaller the duty ratio allocation coefficient, the smaller the duty ratio allocated to the feedforward control signal; and the larger the duty ratio allocation coefficient, the larger the duty ratio allocated to the feedforward control signal. The duty ratio allocation factor can be a fixed value or it can vary depending on the value of the target duty ratio.

In conjunction with the second possible embodiment in the first aspect, in a third possible embodiment in the first aspect, before determining the first duty ratio of the feedforward control signal according to the product of the target duty ratio and the set duty ratio allocation coefficient, the method further includes: determining a duty ratio range to which the target duty ratio belongs; and determining the duty ratio allocation coefficient corresponding to the duty ratio range to which the target duty ratio belongs on the basis of the correspondence relationship between the set duty ratio range and the duty ratio allocation coefficient.

If the duty ratio allocation factor is a variable value, a plurality of duty ratio ranges can be set, and different duty ratio ranges correspond to different duty ratio allocation factors. For example, the duty ratio range can be set to include a first duty ratio range and a second duty ratio range, and the duty ratio in the first duty ratio range is less than the duty ratio in the second duty ratio range. If the target duty ratio is within the first duty ratio range, the first duty ratio allocation factor corresponding to the first duty ratio range is used; and if the target duty ratio is within the second duty ratio range, the second duty ratio allocation factor corresponding to the second duty ratio range is used. The first duty ratio allocation factor is less than the second duty ratio allocation factor. That is, as the target duty ratio increases, the proportion of the duty ratio allocated to the feedforward control signal increases, thus the feedback control signal can be obtained more quickly with smaller PI parameters. It is not limited to the two duty ratio ranges, there can be three or more duty ratio ranges.

In conjunction with the first possible embodiment in the first aspect, in a fourth possible embodiment in the first aspect, before allocating the target duty ratio according to the set duty ratio allocation strategy, and determining the first duty ratio of the feedforward control signal, the method further includes: detecting whether the target duty ratio is greater than a set duty ratio threshold.

If the value of target duty ratio is small, a smaller PI control parameter can be utilized to control the DC-DC converter to output a more stable power. In this case, a duty ratio threshold can be set, and if the target duty ratio is greater than the duty ratio threshold, the target duty ratio will be allocated according to the duty ratio allocation strategy. If the duty ratio is less than or equal to the threshold, control can be performed directly on the basis of the feedback control signal, thereby simplifying the control of the DC-DC converter.

In conjunction with the fourth possible embodiment in the first aspect, in a fifth possible embodiment in the first aspect, the allocating the target duty ratio according to a set duty ratio allocation strategy, and determining a first duty ratio of the feedforward control signal includes: if the target duty ratio is greater than the preset duty ratio threshold, treating the duty ratio value greater than the duty ratio threshold as the first duty ratio of the feedforward control signal.

If the target duty ratio is greater than the duty ratio threshold, the duty ratio, exceeding the duty ratio threshold, in the target duty ratio can be allocated to the feedforward control signal, such that the duty ratio of the feedback control signal can be controlled within a smaller range, and thus the system has a good response speed and stability. For example, if the duty ratio threshold is a and the target duty ratio is b, and b > a, the duty ratio of b-a can be allocated to the feedforward control signal, that is, the first duty ratio is determined to be b-a.

In conjunction with the fourth possible embodiment in the first aspect, in a sixth possible embodiment in the first aspect, the allocating the target duty ratio according to a set duty ratio allocation strategy, and determining a first duty ratio of the feedforward control signal includes: if the target duty ratio is greater than the preset duty ratio threshold, determining the first duty ratio of the feedforward control signal according to the product of the target duty ratio and the set duty ratio allocation coefficient.

If the target duty ratio is greater than the duty ratio threshold, the first duty ratio of the feedforward control signal can be determined according to the set duty ratio allocation coefficient. The duty ratio allocation coefficient can be a fixed value or a variable value. If the duty ratio allocation coefficient is the variable value and the target duty ratio is greater than the duty ratio threshold, different duty ratio allocation coefficients can be determined on the basis of different duty ratio ranges.

In combination with any one of the first aspect to the sixth possible embodiment in the first aspect, in a seventh possible embodiment in the first aspect, the first-side parameter includes a battery voltage and a battery current, and the second-side parameter includes a busbar voltage.

A first side of the DC-DC converter is connected to a battery, and the second side is connected to a DC side for output the busbar voltage. Since different busbar voltages, battery voltages, and battery currents will affect the target duty ratio of the DC-DC converter, a three-dimensional table can be obtained on the basis of the correspondence relationship between the battery voltage, the battery current, the busbar voltage, and the target duty ratio. On the basis of the calibrated three-dimensional table, the target duty ratio corresponding to any battery voltage, battery current, and busbar voltage can be searched.

In conjunction with the seventh possible embodiment in the first aspect, in an eighth possible embodiment in the first aspect, before searching for the target duty ratio of the DC-DC converter on the basis of the correspondence relationship between the first-side parameter, the second-side parameter, and the duty ratio, the method further includes: setting the battery voltage and busbar voltage according to a calibration step size and a calibration range, and generating a battery power command; and if detecting that the battery current matches the current corresponding to the battery power command, and the battery current meets the set stability requirements, determining that the duty ratio of the control signal of the DC-DC converter is the duty ratio calibrated by the battery current, battery voltage, and busbar voltage.

On the basis of the set calibration step size, the battery voltage, battery current, and busbar voltage to be calibrated can be selected within the calibration range. The battery voltage and busbar voltage can be fixed, and then the battery power command can be inputted, the battery operating current is adjusted on the basis of the battery power command, and if the battery operating current matches the battery power command and the stability of the operating current meets the preset requirements, the duty ratio of the control signal of the DC-DC converter can be obtained, which is the duty ratio corresponding to the current battery voltage, busbar voltage, and battery current. By repeating the calibration multiple times, the duty ratio corresponding to each calibrated 3D point can be obtained.

In a second aspect, the embodiment of the present application provides a control apparatus for a DC-DC converter, the apparatus includes: a parameter acquisition unit for acquiring a first-side parameter and a second-side parameter of the DC-DC converter; a target duty ratio determination unit for searching for a target duty ratio of the DC-DC converter on the basis of a correspondence relationship between the first-side parameter, the second-side parameter, and the duty ratio, in which, the correspondence relationship between the first-side parameter, the second-side parameter, and the duty ratio is a correspondence relationship calibrated when the DC-DC converter is in a preset stable operating state; and a feedforward determination unit for determining a feedforward control signal of the DC-DC converter on the basis of the target duty ratio, and controlling the DC-DC converter on the basis of the feedforward control signal and the feedback control signal.

In conjunction with the second aspect, in a first possible embodiment in the second aspect, the determining a feedforward control signal of the DC-DC converter on the basis of the target duty ratio includes: allocating the target duty ratio according to a set duty ratio allocation strategy, and determining a first duty ratio of the feedforward control signal.

During determining the feedforward control signal on the basis of the target duty ratio, the target duty ratio can be allocated on the basis of various duty ratio allocation strategies, so that a portion of the target duty ratio is allocated to the feedforward control signal. Since a portion of the duty ratio is allocated to the feedforward control signal, the amount of increase in the feedback control signal can be reduced, which is beneficial to improving the system response speed. The feedback control signal does not need a large PI control parameter, so that the system oscillations can be reduced, thereby improving the system stability.

In conjunction with the first possible embodiment in the second aspect, in a second possible embodiment in the second aspect, the allocating the target duty ratio according to a set duty ratio allocation strategy, and determining a first duty ratio of the feedforward control signal includes: determining the first duty ratio of the feedforward control signal according to a product of the target duty ratio and a set duty ratio allocation coefficient.

During allocating the target duty ratio, it can be allocated according to the set duty ratio allocation coefficient, that is, a value of the first duty ratio of the feedforward control signal is determined according to the product of the target duty ratio and the duty ratio allocation coefficient. The duty ratio allocation coefficient ranges from [0, 1], the smaller the duty ratio allocation coefficient, the smaller the duty ratio allocated to the feedforward control signal; and the larger the duty ratio allocation coefficient, the larger the duty ratio allocated to the feedforward control signal. The duty ratio allocation factor can be a fixed value or it can vary depending on the value of the target duty ratio.

In conjunction with the second possible embodiment in the second aspect, in a third possible embodiment in the second aspect, before determining the first duty ratio of the feedforward control signal according to the product of the target duty ratio and the set duty ratio allocation coefficient, the method further includes: determining a duty ratio range to which the target duty ratio belongs; and determining the duty ratio allocation coefficient corresponding to the duty ratio range to which the target duty ratio belongs on the basis of the correspondence relationship between the set duty ratio range and the duty ratio allocation coefficient.

If the duty ratio allocation factor is a variable value, a plurality of duty ratio ranges can be set, and different duty ratio ranges correspond to different duty ratio allocation factors. For example, the duty ratio range can be set to include a first duty ratio range and a second duty ratio range, and the duty ratio in the first duty ratio range is less than the duty ratio in the second duty ratio range. If the target duty ratio is within the first duty ratio range, the first duty ratio allocation factor corresponding to the first duty ratio range is used; and if the target duty ratio is within the second duty ratio range, the second duty ratio allocation factor corresponding to the second duty ratio range is used. The first duty ratio allocation factor is less than the second duty ratio allocation factor. That is, as the target duty ratio increases, the proportion of the duty ratio allocated to the feedforward control signal increases, thus the feedback control signal can be obtained more quickly with smaller PID parameters. It is not limited to the two duty ratio ranges, there can be three or more duty ratio ranges.

In conjunction with the first possible embodiment in the second aspect, in a fourth possible embodiment in the second aspect, before allocating the target duty ratio according to the set duty ratio allocation strategy, and determining the first duty ratio of the feedforward control signal, the method further includes: detecting whether the target duty ratio is greater than a set duty ratio threshold.

If the value of target duty ratio is small, a smaller PI control parameter can be utilized to control the DC-DC converter to output a more stable power. In this case, a duty ratio threshold can be set, and if the target duty ratio is greater than the duty ratio threshold, the target duty ratio will be allocated according to the duty ratio allocation strategy. If the duty ratio is less than or equal to the threshold, control can be performed directly on the basis of the feedback control signal, thereby simplifying the control of the DC-DC converter.

In conjunction with the fourth possible embodiment in the second aspect, in a fifth possible embodiment in the second aspect, the allocating the target duty ratio according to a set duty ratio allocation strategy, and determining a first duty ratio of the feedforward control signal includes: if the target duty ratio is greater than the preset duty ratio threshold, treating the duty ratio value greater than the duty ratio threshold as the first duty ratio of the feedforward control signal.

If the target duty ratio is greater than the duty ratio threshold, the duty ratio, exceeding the duty ratio threshold, in the target duty ratio can be allocated to the feedforward control signal, such that the duty ratio of the feedback control signal can be controlled within a smaller range, and thus the system has a good response speed and stability. For example, if the duty ratio threshold is a and the target duty ratio is b, and b > a, the duty ratio of b-a can be allocated to the feedforward control signal, that is, the first duty ratio is determined to be b-a.

In conjunction with the fourth possible embodiment in the second aspect, in a sixth possible embodiment in the second aspect, the allocating the target duty ratio according to a set duty ratio allocation strategy, and determining a first duty ratio of the feedforward control signal includes: if the target duty ratio is greater than the preset duty ratio threshold, determining the first duty ratio of the feedforward control signal according to the product of the target duty ratio and the set duty ratio allocation coefficient.

If the target duty ratio is greater than the duty ratio threshold, the first duty ratio of the feedforward control signal can be determined according to the set duty ratio allocation coefficient. The duty ratio allocation coefficient can be a fixed value or a variable value. If the duty ratio allocation coefficient is the variable value and the target duty ratio is greater than the duty ratio threshold, different duty ratio allocation coefficients can be determined on the basis of different duty ratio ranges.

In conjunction with any one of the second aspect to the sixth possible embodiment in the second aspect, in a seventh possible embodiment in the second aspect, the first-side parameter includes a battery voltage and a battery current, and the second-side parameter includes a busbar voltage.

A first side of the DC-DC converter is connected to a battery, and the second side is connected to a DC side for output the busbar voltage. Since different busbar voltages, battery voltages, and battery currents will affect the target duty ratio of the DC-DC converter, a three-dimensional table can be obtained on the basis of the correspondence relationship between the battery voltage, the battery current, the busbar voltage, and the target duty ratio. On the basis of the calibrated three-dimensional table, the target duty ratio corresponding to any battery voltage, battery current, and busbar voltage can be searched.

In conjunction with the seventh possible embodiment in the second aspect, in an eighth possible embodiment in the second aspect, before searching for the target duty ratio of the DC-DC converter on the basis of the correspondence relationship between the first-side parameter, the second-side parameter, and the duty ratio, the method further includes: setting the battery voltage and busbar voltage according to a calibration step size and a calibration range, and generating a battery power command; and if detecting that the battery current matches the current corresponding to the battery power command, and the battery current meets the set stability requirements, determining that the duty ratio of the control signal of the DC-DC converter is the duty ratio calibrated by the battery current, battery voltage, and busbar voltage.

On the basis of the set calibration step size, the battery voltage, battery current, and busbar voltage to be calibrated can be selected within the calibration range. The battery voltage and busbar voltage can be fixed, and then the battery power command can be inputted, the battery operating current is adjusted on the basis of the battery power command, and if the battery operating current matches the battery power command and the stability of the operating current meets the preset requirements, the duty ratio of the control signal of the DC-DC converter can be obtained, which is the duty ratio corresponding to the current battery voltage, busbar voltage, and battery current. By repeating the calibration multiple times, the duty ratio corresponding to each calibrated 3D point can be obtained.

In a third aspect, the embodiment of the present application provides a DC-DC converter, including a memory, a processor, and a computer program which is stored in the memory and executable on the processor; and the processor, when executing the computer program, implements the steps of any method as described in the first aspect.

In a fourth aspect, the embodiment of the present application provides a computer-readable storage medium, a computer program is stored in the computer-readable storage medium and is executed by a processor to implement the steps of any method as described in the first aspect.

It is to be understood that the beneficial effects in the third aspect and fourth aspect can be referred to relevant description in the first aspect, which will not be repeated here.

### BRIEF DESCRIPTION OF THE DRAWINGS

In order to clearly illustrate the technical solutions in the embodiments of the present application, a brief introduction to the accompanying drawings needed in the description of the embodiments or related technology will be presented below; and obviously, the accompanying drawings described below are merely some embodiments of the present application, and for those of ordinary skill in the art, other accompanying drawings can also be obtained based on these accompanying drawings without creative labor.
FIG. 1 is a schematic diagram of an implementation flow of a control method for a DC-DC converter according to an embodiment of the present application;
FIG. 2 is a schematic structural diagram of a DC-DC converter according to an embodiment of the present application;
FIG. 3 is a schematic diagram of a three-dimensional table determined on the basis of a correspondence relationship according to an embodiment of the present application;
FIG. 4 is a schematic diagram of a control logic of a DC-DC converter according to an embodiment of the present application;
FIG. 5 is a schematic diagram of a change in a fixed duty ratio allocation coefficient according to an embodiment of the present application;
FIG. 6 is a schematic diagram of a variable duty ratio allocation coefficient according to an embodiment of the present application;
FIG. 7 is a schematic diagram of a duty ratio allocation coefficient determined on the basis of a duty ratio threshold according to an embodiment of the present application;
FIG. 8 is a schematic diagram of a duty ratio system coefficient on the basis of a duty ratio threshold and change according to an embodiment of the present application;
FIG. 9 is a schematic diagram of a control system for a DC-DC converter according to an embodiment of the present application;
FIG. 10 is a schematic diagram of comparison of power response speeds according to an embodiment of the present application;
FIG. 11 is a schematic diagram of a control apparatus for a DC-DC converter according to an embodiment of the present application; and
FIG. 12 is a schematic diagram of a DC-DC converter according to an embodiment of the present application.

### DETAILED DESCRIPTION

In the following descriptions, specific details like particular system structures or technologies are given for illustration purposes rather than limitation, so that the embodiments of the present application can be thoroughly understood. However, it will be apparent to persons skilled in the art that the present application may also be implemented in other embodiments without these specific details. In other instances, detailed descriptions of well-known systems, apparatuses, circuits, and methods are omitted so that unnecessary details do not hinder the description of the present application.

In order to illustrate the technical solution in the present application, specific embodiments are provided below.

If a DC-DC converter is applied to voltage conversion, a first voltage can be converted into a second voltage, or the second voltage can be converted into the first voltage. In some application scenarios, the first voltage or second voltage may change suddenly. For example, in an energy storage system, a first side is connected to a battery and a second side is connected to a power grid, and because of time-varying and nonlinear nature of new energy power generation, sudden changes in charging voltage or charging current of an energy storage battery may occur during charging; and the switching on and off of a DC load will cause sudden changes in the discharge power.

Although increasing a PI parameter of a feedback control signal can inhibit power fluctuations on both sides of the DC-DC converters to some extent, the system using the PI parameter increasing method is slow in response and prone to oscillations, which affects system stability.

In order to solve the above problems, the embodiment of the present application provides a control method for a DC-DC converter, and the method includes: on the basis of a preset correspondence relationship between a first-side parameter, a second-side parameter, and a duty ratio of the DC-DC converter, determining a target duty ratio corresponding to the currently acquired first-side parameter and second-side parameter, and then determining a feedforward control signal on the basis of the target duty ratio. The DC-DC converter is controlled with the feedback control signal and the determined feedforward control signal, so that an effective feedback control signal can be obtained without increasing the PI control parameter, and in combination with the determined feedforward control signal, the target control signal of the DC-DC converter can be determined, such that system response speed can be effectively improved and the system oscillation can be reduced, thereby improving the system stability.

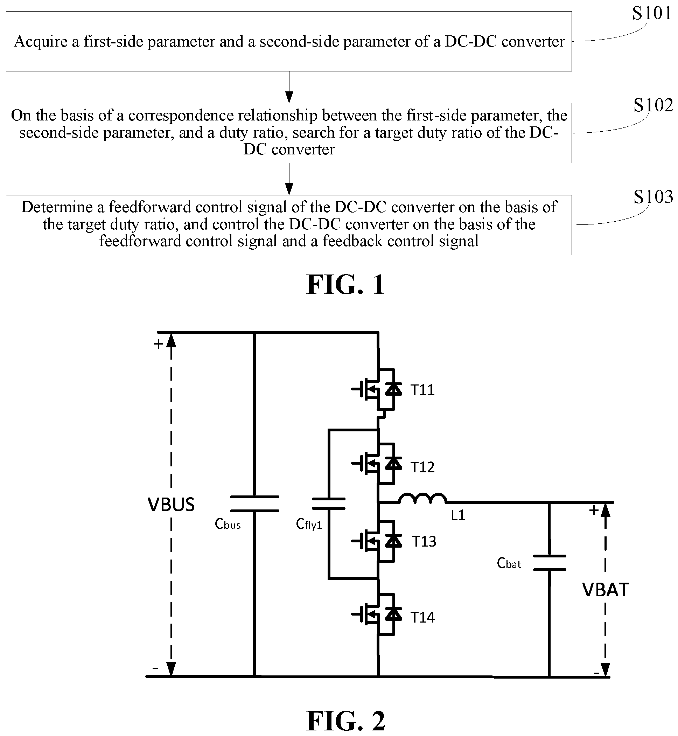

FIG. 1 is a schematic diagram of an implementation flow of a control method for a DC-DC converter according to an embodiment of the present application, which is described in detail below:
S101: Acquire the first-side parameter and the second-side parameter of the DC-DC converter.

In the embodiment of the present application, the first-side parameter and the second-side parameter are parameters related to the control signal of the DC-DC converter. That the first-side parameter and the second-side parameter are parameters related to the control signal of the DC-DC converter can be understood as that if the first-side parameter or the second-side parameter changes, the control signal of the DC-DC converter will also change.

For example, a first side of the DC-DC converter is connected to a battery, and a second side is connected to a DC side. The first-side parameters can include a battery voltage and a battery current, and the second-side parameters can include a busbar voltage. It is not limited to this, since a product of the battery voltage and the battery current is a battery power, a third parameter can be determined on the basis of any two of the battery voltage, the battery current, and the battery power, therefore, the first parameter can include any two of the battery voltage, the battery current, and the battery power. For example, the first-side parameters can include the battery power and the battery voltage, or the battery current and the battery voltage, or the battery current and the battery power.

The battery voltage can be obtained by a divider resistance measurement method or by a voltage sensor. The battery current can be measured using a current sensor.

FIG. 2 is a schematic diagram of a circuit structure of a DC-DC converter according to an embodiment of the present application. As shown in FIG. 2, the right side is the first side of the DC-DC converter and is connected to the battery. The first-side parameters that is needed to be obtained can include the battery voltage and the battery current. The left side is the second side of the DC-DC converter and is connected to a power grid. The second-side parameter includes a busbar voltage outputted by the voltage converter.

The voltage converter includes a first switch T11, a second switch T12, a third switch T13, a fourth switch T14, a resonant inductor L1, a bus capacitor Cbus, a flying capacitor Cfly, and a battery capacitor Cbat. Switch pins of the first switch T11, the second switch T12, the third switch T13, and the fourth switch T14 are connected in sequence, that is, a second switch pin of the first switch T11 is connected to a first switch pin of the second switch T12, the second switch pin of the second switch T12 is connected to the first switch pin of the third switch T13, the second switch pin of the third switch T13 is connected to the first switch pin of the fourth switch T14, a first terminal of the first switch T11 is connected to a positive electrode of a busbar, and a second terminal of the fourth switch T14 is connected to a negative electrode of the busbar. A first end of the flying capacitor is connected to the second switch pin of the first switch T11, and a second end of the flying capacitor is connected to the second switch pin of the third switch T13. The second terminal of the second switch pin is connected to the first end of the resonant inductor L1, and the second end of the resonant inductor L1 is connected to the positive electrode of the battery.

In a possible embodiment, the first switch T11 and the fourth switch T14 form a set of switching tubes with complementary control timing, and the second switch T12 and the third switch T13 form a set of switching tubes with complementary control timing. The control timing of the first switch T11 and the second switch T12 differs by a preset angle, such as 180 degrees. In the present application, the feedforward control signal can be determined on the basis of the searched target duty ratio, and the control signal for bidirectional conversion of the DC-DC converter can be obtained by superimposing the feedforward control signal and the feedback control signal, thereby controlling the voltage converter to achieve conversion between step-up and step-down.

It is to be understood that the circuit structure of the DC-DC converter is not limited to the circuit structure shown in FIG. 2.

S102: On the basis of the correspondence relationship between the first-side parameter, the second-side parameter, and the duty ratio, search for a target duty ratio of the DC-DC converter.

In the embodiment of the present application, the correspondence relationship between the first-side parameter, the second-side parameter, and the duty ratio can be calibrated. During calibrating the correspondence relationship, it is to be determined that the DC-DC converter is in a preset stable operating state, and then the target duty ratio corresponding to the first-side parameter and the second-side parameter is determined in the preset stable state. The preset steady state can be understood as that the oscillation of an output voltage and/or output current is less than a preset amplitude threshold. During calibration, the value of the duty ratio can be adjusted until the DC-DC converter meets requirements for the preset stable operating state, and then the duty ratio for calibrating the current first-side parameter and second-side parameter can be determined.

If the first-side parameter includes the battery voltage and the battery current, and the second-side parameter includes the busbar voltage, parameter points to be calibrated can be determined on the basis of the set calibration range (parameter variation range) and calibration step size; and on the basis of the calibrated parameter points, the duty ratio corresponding to each parameter point can be determined. After calibrating the duty ratio corresponding to each parameter point, a three-dimensional calibration chart can be obtained, that is, the duty ratio is determined on the basis of three parameter dimensions of the battery voltage, the battery current, and the busbar voltage.

For example, for a DC-DC converter to be calibrated, the calibration range of the busbar voltage, that is, the operating range of the busbar voltage, is 1,000-1,500 V, the calibration range of the battery voltage (operating voltage range) is 300-1,200 V, and the calibration range of the battery current (operating current range) is -50 A to 50 A. The voltage calibration step can be set to be 100 V, and the current calibration step can be set to be 10 A.

During calibrating, the busbar voltage and the battery voltage can be fixed first. For example, the busbar voltage can be fixed at 1,000 V and the battery voltage at 300 V, then, the battery calibration current can be switched from -50 A to 50 A in 10A step according to a current command, and a steady-state battery calibration current outputted by the DC-DC converter can be recorded, such as the duty ratio of the DC-DC converter when the fluctuation amplitude of the battery current is less than a preset amplitude threshold.

After all battery calibration currents are calibrated at a busbar voltage of 1,000 V and a battery voltage of 300 V, the battery voltage can be switched within the battery voltage range according to the preset voltage step size until the calibration of all battery voltages at the busbar voltage of 1,000 V is completed. For example, all battery calibration currents are calibrated at the busbar voltage of 1,000 V and the battery voltage of 400V, and then the voltage is increased to 500 V for calibration, until it is increased to 1,200 V.

For example, if the busbar voltage is 1,000 V, the battery voltage in the range of 300-1,200 V can be calibrated at 100V step, and the battery current in the range of -50 A to 50 A can be calibrated at 10A step, then the following calibration table can be obtained:

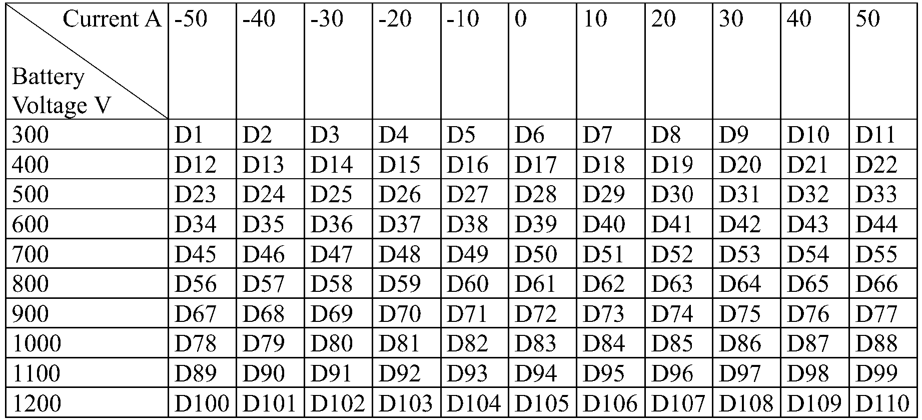

In which, Di (i is a natural number) represents the target duty ratio corresponding to the first-side parameter and the second-side parameter, namely the busbar voltage, the battery voltage, and the battery current.

After all parameter points to be calibrated for the battery voltage and the battery current at the busbar voltage of 1,000 V are calibrated, the voltage can be increased to 1,100 V at the voltage step; then, the parameter points to be calibrated for all battery voltages and battery currents at this voltage are calibrated until all busbar voltage calibration points within the bus battery range are calibrated. The correspondence relationship between each calibrated parameter point of the battery voltage, battery current, and busbar voltage and the duty ratio is obtained.

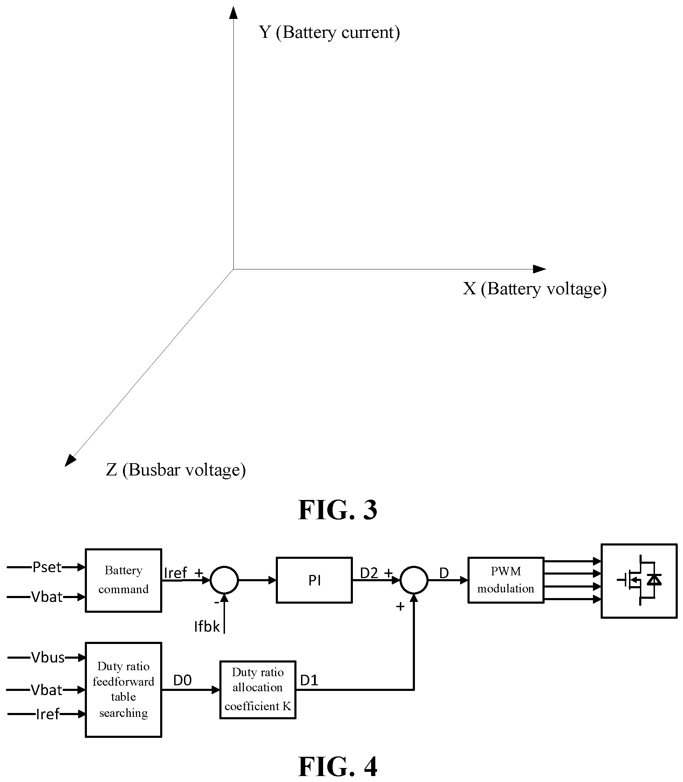

As shown in FIG. 3, if the battery voltage, battery current, and busbar voltage are used as an X axis, a Y axis, and a Z axis of a coordinate system respectively, a three-dimensional coordinate system as shown in FIG. 3 can be obtained. In this three-dimensional coordinate system, the corresponding duty ratio can be directly searched for each calibrated parameter point within the calibration range. The target duty ratio can be searched on the basis of the current battery voltage, battery current, and busbar voltage.

It is to be understood that the battery voltage and battery current can be any two of the battery voltage, battery current, and battery power.

S103: Determine a feedforward control signal of the DC-DC converter on the basis of the target duty ratio, and control the DC-DC converter on the basis of the feedforward control signal and the feedback control signal.

In the embodiment of the present application, during determining the feedforward control signal of the DC-DC converter on the basis of the target duty ratio, a portion of the target duty ratio can be allocated to the feedforward control signal on the basis of the set allocation strategy.

The first duty ratio of the feedforward control signal can be determined using the set allocation strategy according to a fixed duty ratio allocation coefficient.

A control logic chart of the DC-DC converter can be shown in FIG. 4; a control signal D for the DC-DC converter is generated by superimposing the feedback control signal and the feedforward control signal. The battery command can be obtained on the basis of the battery power command Pset and the battery voltage, and a reference current Iref can be determined. The feedback control signal can be compared with the feedback current Ifbk according to the reference current Iref in the current command, and the comparison result is subjected to PI regulation by a PI regulator to obtain a second duty ratio D2 of the feedback control signal. The feedforward control signal is searched from up from the table via the duty ratio according to the battery voltage Vbat, busbar voltage Vbus, and reference current Iref, and on the basis of the acquired battery voltage Vbat and busbar voltage Vbus, and in combination with the reference current Iref in the received current command, the target duty ratio D0 is obtained by searching for the table. On the basis of the set duty ratio allocation coefficient k, the first duty ratio of the target duty ratio determined to be allocated to the feedforward control signal is determined as D1 = D0 * k. By superimposing the first duty ratio D1 and the second duty ratio D2, the target duty ratio D for controlling the DC-DC converter is generated and is used for controlling the state of a conversion switch of the DC-DC converter.

Since the feedforward control signal, i.e. the first duty ratio, can be quickly determined by searching from the table, the corresponding feedforward control signal can be quickly obtained by the PI regulator without a large PI parameter, thus reducing the probability of overshoot in the PI regulator and improving the system stability.

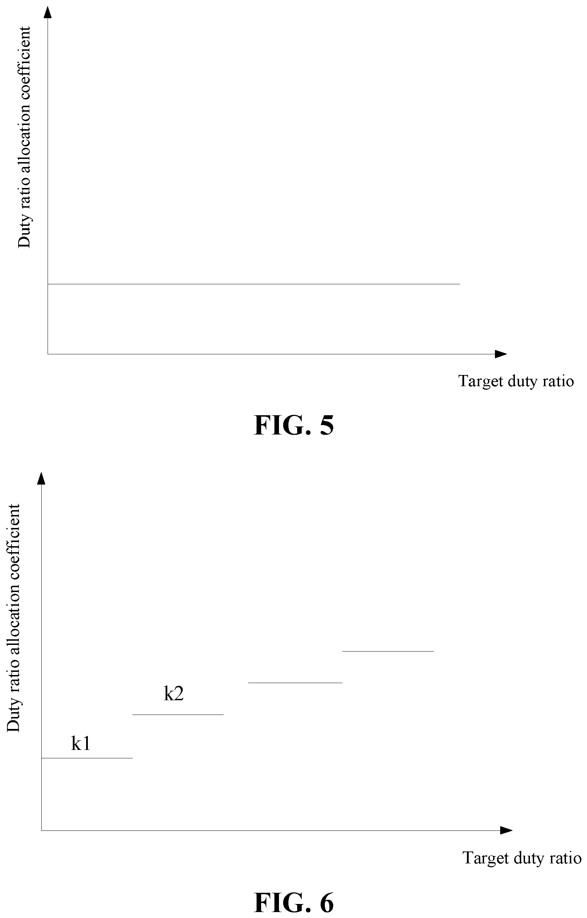

During using the fixed duty ratio allocation coefficient, the relationship between the determined first duty ratio of the feedforward control signal and the target duty ratio is shown in FIG. 5, and the duty ratio allocation coefficient is a fixed value. In this case, as the target duty ratio increases, the first duty ratio of the feedforward control signal increases by the same proportion. As the first duty ratio is increased, if the first duty ratio is superimposed with the second duty ratio in the feedback control signal to generate the target duty ratio, the change in the second duty ratio is reduced, and therefore, the requirements for the PI parameter can be decreased, thereby making the system more stable and the response faster.

In some possible embodiments, the duty ratio allocation factor can be a variable value. As shown in FIG. 6, the target duty ratio can be divided into a plurality of duty ratio ranges. Each duty ratio range corresponds to a different duty ratio allocation coefficient. For example, as shown in FIG. 6, the duty ratio in the first duty ratio range is less than the duty ratio in the second duty ratio range, and the first duty ratio allocation coefficient k1 corresponding to the first duty ratio range is less than the second duty ratio allocation coefficient k2 corresponding to the second duty ratio range. That is, as the target duty ratio increases, the proportion of the duty ratio allocated to the feedforward control signal increases.

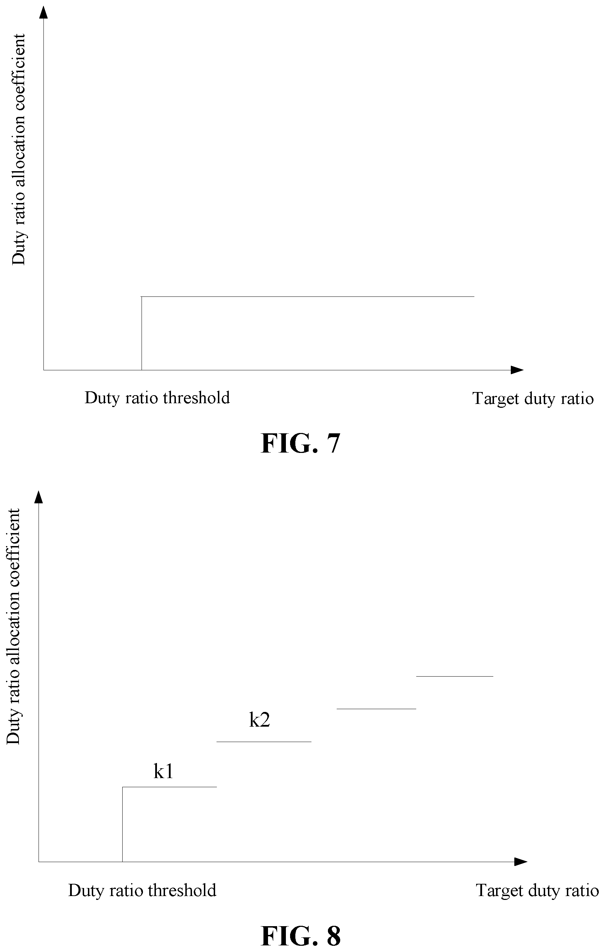

In some possible embodiments, activation conditions for the duty ratio allocation coefficient can also be set. As shown in FIG. 7, a duty ratio threshold can be set, and if the target duty ratio is greater than the threshold, a portion of the target duty ratio can be allocated to the feedforward control signal according to the fixed duty ratio allocation coefficient. If the target duty ratio is less than or equal to the duty ratio threshold, the feedforward control signal does not participate in the allocation of the target duty ratio.

Or, as shown in FIG. 8, if the target duty ratio is less than or equal to the duty ratio threshold, the feedforward control signal does not participate in the allocation of the target duty ratio. If the target duty ratio is greater than the duty ratio threshold, a portion of the target duty ratio is allocated to the feedforward control signal through a varying duty ratio allocation coefficient to obtain the first duty ratio. By superimposing the first duty ratio of the feedforward control signal with the second duty ratio of the feedback control signal, the target duty ratio of the DC-DC converter can be quickly obtained.

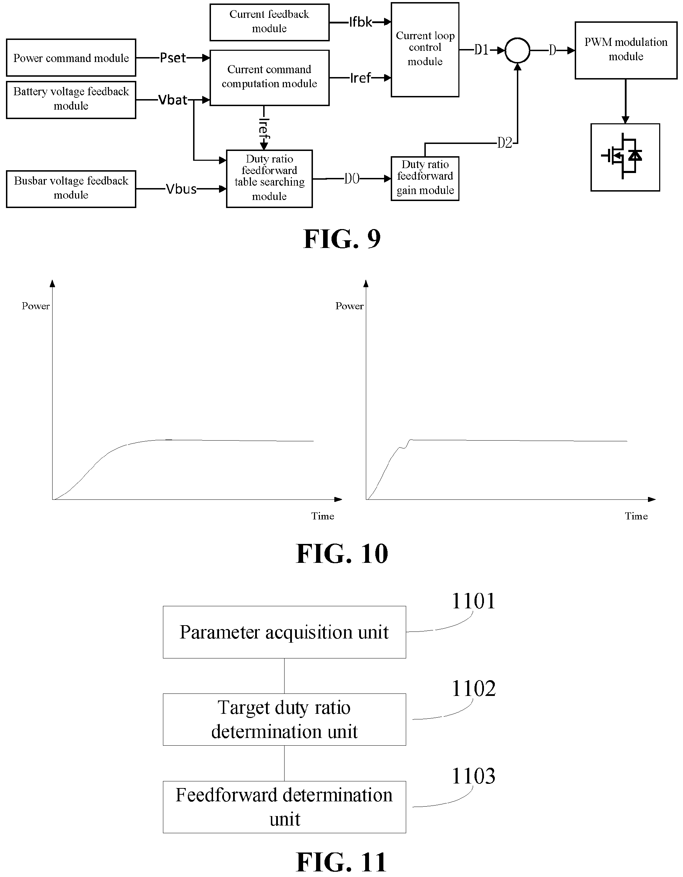

FIG. 9 is a control block diagram of a DC-DC converter according to an embodiment of the present application. As shown in FIG. 9, the control block diagram includes a power command module, a battery voltage feedback module, a busbar voltage feedback module, a current feedback module, a current command computation module, a duty ratio feedforward table searching module, a current loop control module, a duty ratio feedforward gain module, and a PWM modulation module.

The power instruction module is configured to receive a power Pset. The battery voltage feedback module is configured to detect the battery voltage Vbat. The busbar voltage feedback module is configured to detect the busbar voltage Vbus. The current feedback module is configured to detect the battery operating current Ifbk, and the current command computation module is configured to compute the battery reference current Iref on the basis of the power Pset from the power command module and the battery voltage Vbat detected by the battery voltage feedback module. The current loop control module is configured to compare the reference current with the battery operating current Ifbk, and the comparison result is subjected to PI regulation to obtain the second duty ratio D2 of the feedback control signal. The duty ratio feedforward table searching module is configured to search from the table to obtain the target duty ratio D0 on the basis of the battery voltage Vbat, reference current Iref, and busbar voltage Vbus, and determine the first duty ratio D1 on the basis of the duty ratio allocation coefficient k in the duty ratio feedforward gain module. The first duty ratio D1 and the second duty ratio D2 are superimposed to obtain the target duty ratio, and the target duty ratio is utilized to perform conversion control on the DC-DC converter by the PWM modulation module.

FIG. 10 is a schematic diagram of comparison of an output response speed of a control method for a DC-DC converter according to an embodiment of the present application. In FIG. 10, the left figure is a schematic diagram of a power change curve when the power response is improved by increasing the PI parameter, and the right figure is a schematic diagram of a power change curve determined according to the set fixed duty ratio allocation coefficient of 0.8 by searching from the table to determine the target duty ratio and determining the feedforward control signal according to the target duty ratio. By comparing the left and right figures, it is clear that by means of the method for searching from the table to determine the feedforward control signal in the present application, the power response speed can be effectively improved.

It is to be understood that the sequence number of each step in the above embodiments does not imply the order of execution, the execution order of each process is determined by its function and internal logic, and does not constitute any limitation on the implementation process of the embodiments of the present application.

FIG. 11 is a schematic diagram of a control apparatus for a DC-DC converter according to an embodiment of the present application, as shown in FIG. 11, the apparatus includes:
a parameter acquisition unit 1101 configured to acquire a first-side parameter and a second-side parameter of the DC-DC converter.

A target duty ratio determination unit 1102 is configured to search for a target duty ratio of the DC-DC converter according to a correspondence relationship between the first-side parameter, the second-side parameter, and the duty ratio, in which, the correspondence relationship between the first-side parameter, the second-side parameter, and the duty ratio is a correspondence relationship calibrated when the DC-DC converter is in a preset stable operating state.

A feedforward determination unit 1103 is configured to determine a feedforward control signal of the DC-DC converter according to the target duty ratio, and to control the DC-DC converter according to the feedforward control signal and the feedback control signal.

The control apparatus for the DC-DC converter shown in FIG. 11 corresponds to the control method for the DC-DC converter shown in FIG. 1.

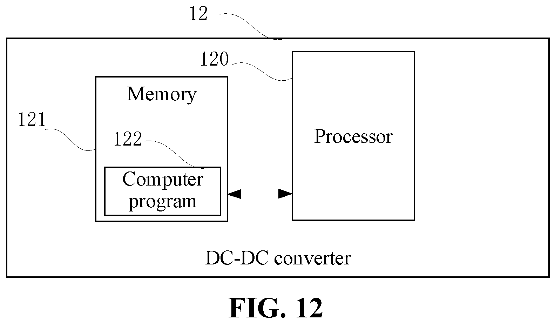

FIG. 12 is a schematic diagram of a DC-DC converter according to an embodiment of the present application. As shown in FIG. 12, the DC-DC converter 12 in this embodiment includes: a processor 120, a memory 121, and a computer program 122 which is stored in the memory 121 and executable on the processor 120, such as a control program for the DC-DC converter. The processor 120 executes the computer program 122 to implement the steps in each abovementioned embodiment of the control method for the DC-DC converter. Or, the processor 120 executes the computer program 122 to implement the functions of each module/unit in each abovementioned embodiment of the apparatus.

By way of example, the computer program 122 can be divided into one or more modules/units, which are stored in the memory 121 and executed by the processor 120 to implement the present application. The one or more modules/units can be a series of computer program instruction segments capable of performing specific functions, and the instruction segments are configured to describe the execution process of the computer program 122 in the DC-DC converter 12.

The DC-DC converter can include, but is not limited to, the processor 120 and the memory 121. Those skilled in the art will understand that FIG. 12 is merely an example of the DC-DC converter 12 and does not constitute a limitation on the DC-DC converter 12; it can include more or fewer components than shown, or combine certain components, or different components, for example, the DC-DC converter can also include input/output devices, network access devices, buses, etc.

The processor 120 can be a central processing unit (CPU), or other general-purpose processors, digital signal processors (DSPs), application specific integrated circuits (ASICs), field-programmable gate arrays (FPGAs), or other programmable logic devices, discrete gate or transistor logic devices, discrete hardware components, etc. The general-purpose processors can be microprocessors or any conventional processors.

The memory 121 can be an internal storage unit of the DC-DC converter 12, such as a hard disk or memory of the DC-DC converter 12. The memory 121 can also be an external storage device of the DC-DC converter 12, such as a plug-in hard drive, smart media card (SMC), secure digital (SD) card, and flash card equipped on the DC-DC converter 12. Further, the memory 121 can also include both the internal storage unit and the external storage unit of the DC-DC converter 12. The memory 121 is configured to store the computer program and other programs and data required by the DC-DC converter. The memory 121 can also be configured to temporarily store data that is outputted or to be outputted.

The embodiment of the present application also provides an energy storage system, which includes the DC-DC converter.

Those skilled in the art can clearly understand that, for the sake of convenience and simplicity in description, the examples above are only on the basis of the division of the functional units and modules mentioned; in actual applications, these functions can be distributed among different units or modules as needed, meaning the internal structure of the apparatus can be divided into different functional units or modules to accomplish all or part of the functions described above. All the functional units and modules in the embodiments may be integrated into one processing unit, or each unit independently exists physically, or two or more units may be integrated into one unit. The integrated units mentioned above may be implemented in a form of hardware or in a form of functional units of software. In addition, the specific names of the functional units and modules are only for the convenience of distinguishing each other and are not used to limit the scope of protection of the present application. The specific working process of the units and modules in the system described above may refer to the corresponding process in the foregoing method embodiments, and description thereof will be omitted herein.

In the embodiments mentioned above, the description of each embodiment has its own emphasis. For parts that are not described in detail in a certain embodiment, reference may be made to the relevant descriptions of other embodiments.

Those of ordinary skill in the art may realize that units and algorithm steps of each example described with reference to the embodiments disclosed herein can be implemented in electronic hardware, or a combination of computer software and electronic hardware. Whether these functions are performed in hardware or software depends on a specific application and a design constraint condition of the technical solution. Those skilled in the art can use different methods to implement the described functions for each particular application, but it should not be considered that the implementation goes beyond the scope of the embodiments of the present application.

In the embodiments provided in the present application, it is to be understood that the disclosed apparatus/ terminal device and method may be implemented in other manners. For example, the apparatus/ terminal device embodiments described above are merely exemplary. For example, the division of the modules or units is merely the division of logic functions, and may use other division manners during actual implementation. For example, a plurality of units or components may be combined, or may be integrated into another system, or some features may be omitted or not performed. In addition, the displayed or discussed mutual couplings or direct couplings or communication connections may be implemented through some interfaces; and the indirect couplings or communication connections between the apparatuses or units may be implemented in electronic, mechanical, or other forms.

The units described as separate components may or may not be physically separated, and components displayed as units may or may not be physical units, that is, may be located in one place, or may be distributed to a plurality of network units. Some or all of the units may be selected according to actual needs to achieve the purpose of the solution in this embodiment.

In addition, the functional units in the embodiments of the present application may be integrated into one processing unit, or the units may physically exist separately, or two or more of the units may be integrated into one unit. The integrated unit mentioned above can be implemented in the form of hardware or in the form of a functional unit of software.

When the integrated module/unit is implemented in the form of a functional unit of software and sold or used as an independent product, the integrated module/unit may be stored in a computer-readable storage medium. Based on such understanding, to implement all or part of the processes in the embodiment methods mentioned above, the present application may also instruct relevant hardware through a computer program. The computer program may be stored in a computer-readable storage medium, and the computer program may implement the steps of the method embodiments mentioned above when executed by a processor. The computer program includes computer program codes, which may be in a source code form, in an object code form, an executable file or in some intermediate forms. The computer-readable medium may include: any entity or device capable of carrying the computer program code, a recording medium, a USB flash disk, a mobile hard disk, a magnetic disk, an optical disk, a computer memory, a read-only memory (ROM), a random access memory (RAM), an electric carrier signal, a telecommunication signal, a software distribution medium, etc. It should be noted that the content contained in the computer-readable medium can be appropriately increased or decreased according to the requirements of legislation and patent practices in the jurisdiction. For example, in some jurisdictions, according to legislation and patent practices, the computer-readable medium does not include an electric carrier signal or a telecommunication signal.

The above embodiments are only used for illustrating the technical solutions of the present application, and are not limited to them; although the present application has been described in detail with reference to the foregoing embodiments, those of ordinary skill in the art should understand that it may still modify the technical solutions described in the foregoing embodiments, or replace some of the technical features therein; these modifications or substitutions do not make the essence of the corresponding technical solutions out of the scope of the technical solutions of each embodiment of the present application, and they shall be covered within the spirit and scope of the present application.

## Claims

1. A control method for a DC-DC converter, comprising:
acquiring a first-side parameter and a second-side parameter of the DC-DC converter;
searching for a target duty ratio of the DC-DC converter on the basis of a correspondence relationship between the first-side parameter, the second-side parameter, and a duty ratio, in which, the correspondence relationship between the first-side parameter, the second-side parameter, and the duty ratio is a correspondence relationship calibrated when the DC-DC converter is in a preset stable operating state; and
determining a feedforward control signal of the DC-DC converter on the basis of the target duty ratio, and controlling the DC-DC converter on the basis of the feedforward control signal and a feedback control signal.

2. The method according to claim 1, wherein the determining a feedforward control signal of the DC-DC converter on the basis of the target duty ratio comprises:
allocating the target duty ratio according to a set duty ratio allocation strategy, and determining a first duty ratio of the feedforward control signal.

3. The method according to claim 2, wherein the allocating the target duty ratio according to a set duty ratio allocation strategy, and determining a first duty ratio of the feedforward control signal comprises:
determining the first duty ratio of the feedforward control signal according to a product of the target duty ratio and a set duty ratio allocation coefficient.

4. The method according to claim 3, wherein before determining the first duty ratio of the feedforward control signal according to the product of the target duty ratio and the set duty ratio allocation coefficient, the method further comprises:
determining a duty ratio range to which the target duty ratio belongs; and
determining the duty ratio allocation coefficient corresponding to the duty ratio range to which the target duty ratio belongs on the basis of the correspondence relationship between the set duty ratio range and the duty ratio allocation coefficient.

5. The method according to claim 2, wherein before allocating the target duty ratio according to the set duty ratio allocation strategy, and determining the first duty ratio of the feedforward control signal, the method further comprises:
detecting whether the target duty ratio is greater than a set duty ratio threshold.

6. The method according to claim 5, wherein the allocating the target duty ratio according to a set duty ratio allocation strategy, and determining a first duty ratio of the feedforward control signal comprises:
if the target duty ratio is greater than a preset duty ratio threshold, treating the duty ratio value greater than the duty ratio threshold as the first duty ratio of the feedforward control signal.

7. The method according to claim 5, wherein the allocating the target duty ratio according to a set duty ratio allocation strategy, and determining a first duty ratio of the feedforward control signal comprises:
if the target duty ratio is greater than a preset duty ratio threshold, determining the first duty ratio of the feedforward control signal according to a product of the target duty ratio and a set duty ratio allocation coefficient.

8. The method according to any one of claims 1 to 7, wherein the first-side parameter comprises a battery voltage and a battery current, and the second-side parameter comprises a busbar voltage.

9. The method according to claim 8, wherein before searching for the target duty ratio of the DC-DC converter on the basis of the correspondence relationship between the first-side parameter, the second-side parameter, and the duty ratio, the method further comprises:
setting the battery voltage and busbar voltage according to a calibration step size and a calibration range, and generating a battery power command;
if detecting that the battery current matches the current corresponding to the battery power command, and the battery current meets set stability requirements, determining that the duty ratio of the control signal of the DC-DC converter is the duty ratio calibrated by the battery current, battery voltage, and busbar voltage.

10. A control apparatus for a DC-DC converter, comprising:
a parameter acquisition unit for acquiring a first-side parameter and a second-side parameter of the DC-DC converter;
a target duty ratio determination unit for searching for a target duty ratio of the DC-DC converter on the basis of a correspondence relationship between the first-side parameter, the second-side parameter, and a duty ratio, in which, the correspondence relationship between the first-side parameter, the second-side parameter, and the duty ratio is a correspondence relationship calibrated when the DC-DC converter is in a preset stable operating state; and
a feedforward determination unit for determining a feedforward control signal of the DC-DC converter on the basis of the target duty ratio, and controlling the DC-DC converter on the basis of the feedforward control signal and a feedback control signal.

11. A DC-DC converter, comprising a memory, a processor, and a computer program which is stored in the memory and executable on the processor, wherein the processor, when executing the computer program, implements steps of the method according to any one of claims 1 to 9.

12. A computer-readable storage medium, wherein a computer program is stored in the computer-readable storage medium, and the computer program, when executed by a processor, implements steps of the method according to any one of claims 1 to 9.
